# EUROPÄISCHE PATENTSCHRIFT

(11) **EP 2 542 380 B1**
(45) Veröffentlichungstag und Bekanntmachung des Hinweises auf die Patenterteilung: **07.12.2016**
(21) Anmeldenummer: 10768435.9
(22) Anmeldetag: 07.10.2010
(51) Int. Cl.: B23Q 39/02

(54) **SPANABHEBENDE BEARBEITUNGSMASCHINE**
CUTTING MACHINE TOOL
MACHINE D'USINAGE PAR ENLÈVEMENT DE COPEAUX

(30) Priorität: 02.03.2010 DE 102010000603
(43) Veröffentlichungstag der Anmeldung: 09.01.2013
(73) Patentinhaber: IMO Holding GmbH, 91350 Gremsdorf (DE)
(72) Erfinder: RUß, Erich, 91350 Gremsdorf (DE); SEIFERT, Lothar, 91325 Adelsdorf (DE); GOLD, Oliver, 90455 Nürnberg (DE)
(74) Vertreter: Küchler, Stefan
(86) Internationale Anmeldenummer: PCT/EP2010/065049
(87) Internationale Veröffentlichungsnummer: WO 2011/107169

(56) Entgegenhaltungen:
- EP-A1- 0 032 890
- WO-A1-2004/054753
- WO-A2-2009/078053

## Beschreibung

Die vorliegende Erfindung betrifft eine spanabhebende Bearbeitungsmaschine, insbesondere Drehmaschine, mit einem drehend um eine Werktischdrehachse antreibbaren Werktisch zur Aufnahme eines Werkstücks und mit einem ortsfesten Ständer, an dem zwei spanabhebende Werkzeuge aufnehmende Werkzeugträger relativ zum Werktisch verfahrbar gehalten sind.

Eine derartige Bearbeitungsmaschine ist beispielsweise in der DE-A-25 40 979 offenbart. Diese umfasst einen drehend um eine Werktischdrehachse antreibbaren Werktisch zur Aufnahme eines Werkstücks und einen einzelnen ortsfesten Ständer, an dem zwei spanabhebende Werkzeuge aufnehmende Werkzeugträger auf einem Kreuz bzw. Querschotten relativ zum Werktisch verfahrbar gehalten sind. Entsprechend können die Werkzeugträger relativ zu dem auf dem Werktisch gespannten Werkstück positioniert werden, um die notwendigen Bearbeitungsvorgänge auszuführen. Die Ausbildung der Bearbeitungsmaschine mit zwei Werkzeugträgern ist insbesondere dahingehend vorteilhaft, dass ein auf dem Werktisch angeordnetes Werkstück zeitgleich mit mehreren Werkzeugen bearbeitet werden kann. Ein Nachteil der in der DE-A-25 40 979 offenbarten Bearbeitungsmaschine besteht allerdings dahingehend, dass der Ständer mit den daran gehaltenen Werkzeugträgern sehr wuchtig ist. Entsprechend nimmt dieser einen sehr großen Bauraum in Anspruch und ist mit hohen Fertigungskosten verbunden. Darüber hinaus ist der Werktisch von derjenigen Seite, an welcher der Ständer mit den Werkzeugträgern angeordnet ist, nur sehr schwer zugänglich, weshalb ein Bestücken des Werktisches bzw. ein Spannen von Werkstücken im Einzelfall problematisch sein kann. Ferner kann die Anzahl der Werkzeugträger mangels freiem Bauraum nicht weiter erhöht werden, weshalb eine Verkürzung der Bearbeitungszeit durch Ergänzung weiterer Werkzeugträger bei der beschriebenen Bauweise nicht möglich erscheint.

Die WO 2009/078053 A2 offenbart eine automatische Station zum Schneiden und Bearbeiten von Werkstücken, umfassend wenigstens drei Arbeitsköpfe, welche entlang von Tragstrukturen bewegbar sind. Dabei ist in Fig. 1 dieses Dokuments eine Anordnung mit insgesamt drei, nicht miteinander verbundenen Ständern offenbart, wobei sich an jedem Ständer nur je ein Werkzeugträger befindet. Bei den übrigen Ausführungsformen dieses Dokuments sind die Werkzeugträger dagegen als Roboterarme ausgebildet und überhaupt nicht an Ständern angeordnet, sondern an mehrere Ständer miteinander verbindenden Traversen. Diese Traversen beeinträchtigen jedoch die Bewegungsfreiheit der Roboterarme.

Ausgehend von diesem Stand der Technik ist es eine Aufgabe der vorliegenden Erfindung, eine spanabhebende Bearbeitungsmaschine der eingangs genannten Art zu schaffen, die wenig Bauraum einnimmt, deren Werktisch von allen Seiten gut zugänglich ist und mit der sehr geringe Bearbeitungszeiten erzielt werden können.

Zur Lösung dieser Aufgabe schafft die vorliegende Erfindung eine spanabhebende Bearbeitungsmaschine, insbesondere Drehmaschine, mit einem drehend um eine Werktischdrehachse antreibbaren Werktisch zur Aufnahme eines Werkstücks und mit wenigstens zwei ortsfesten Ständern, an denen jeweils zwei spanabhebende Werkzeuge aufnehmende Werkzeugträger relativ zum Werktisch jeweils verfahrbar gehalten sind, wobei die Werkzeugträger wenigstens eines Ständers einen rechten oder spitzen Winkel (α) von 90° oder weniger zueinander einschließen und jeweils im Wesentlichen radial zur Werktischdrehachse verfahrbar sind, und wobei die Werkz8eugträger wenigstens eines Ständers einen Winkel 20° ≤ α ≤ 60° zueinander einschließen.

Aufgrund der Tatsache, dass wenigstens zwei ortsfeste Ständer vorgesehen sind, an denen jeweils zwei spanabhebende Werkzeuge in V-förmiger Anordnung im Wesentlichen radial zur Werktischdrehachse verfahrbar gehalten sind, nimmt die erfindungsgemäße Bearbeitungsmaschine nur wenig Bauraum ein. Darüber hinaus verbleibt zwischen den einzelnen Ständern ein Zwischenraum, der eine weitere Zugangsmöglichkeit zum Werktisch darstellt, wodurch ein Spannen von Werkstücken im Einzelfall erleichtert wird. Da die erfindungsgemäße Bearbeitungsmaschine wenigstens vier Werkzeugträger aufweist, können zudem sehr kurze Bearbeitungszeiten erzielt werden. Sollten vier Werkzeugträger für das geplante Einsatzgebiet der erfindungsgemäßen Bearbeitungsmaschine nicht ausreichen, so lassen sich problemlos weitere Werkzeugträger durch Hinzufügen entsprechender ortsfester Ständer ergänzen. Indem die Werkzeugträger wenigstens eines Ständers einen Winkel 20° ≤ (α) ≤ 60° zueinander einschließen, insbesondere einen Winkel (α) von 45°, ist die Erreichbarkeit der Werkzeuge im Hinblick auf eine Umrüstung der Maschine ideal, ebenso wie die Zugänglichkeit des Bearbeitungsraumes.

Gemäß einer Ausgestaltung der vorliegenden Erfindung sind die Ständer im Wesentlichen ringsegmentartig ausgebildet. Entsprechend nehmen sie nur sehr wenig Bauraum in Anspruch.

Bevorzugt sind die Ständer derart an gegenüberliegenden Seiten des Werktisches angeordnet, dass zumindest zwei ihrer Werkzeugträger in einer gemeinsamen vertikalen Ebene positioniert sind, die bevorzugt die Werktischdrehachse umfasst. Zumindest für die an den in der gemeinsamen vertikalen Ebene angeordneten Werkzeugträgern gehaltenen Werkzeuge können auf diese Weise die während der Bearbeitung eines Werkstückes auftretenden Schnittkräfte erheblich reduziert werden, da sie sich zumindest teilweise gegeneinander aufheben.

Vorteilhaft ist unterhalb des Werktisches zumindest ein Förderband zum Abführen von Spänen vorgesehen, die während der Bearbeitung anfallen.

Bevorzugt sind der Verfahrbewegung der Werkzeugträger folgende Faltenbalge und/oder jalousieartige oder lamellenartig angeordnete Metallschienen oder -streben vorgesehen, die ein Eindringen von Fremdkörpern in Hohlräume der Werkzeugträger und/oder der Ständer verhindern, wodurch Beschädigungen der Bearbeitungsmaschine und mit diesen einhergehende Stillstandszeiten vermieden werden.

In einer weiteren Ausgestaltung der Erfindung sind die Basis und/oder die Ständer aus einer mit Polymerbeton ausgegossenen Schweißkonstruktion gebildet. Eine derartige Anordnung ist sehr schwingungsarm und vorteilhaft für die Dynamik der Maschine.

In einer weiteren Ausgestaltung der Erfindung sind an wenigstens einem der Werkzeugträger wenigstens zwei spanabhebende Werkzeuge angeordnet, so dass wenigstens zwei verschiedene Oberflächen des Werkstücks, insbesondere eine innenliegende und eine außenliegende Oberfläche eines ringförmigen Werkstücks, simultan und/oder gleichzeitig bearbeitbar sind.

Durch eine derartige Anordnung der Werkzeuge können gleichzeitig zwei Oberflächen oder Geometrien an dem Werkstück gefertigt werden. Durch die Andruckkräfte der Werkzeuge entstehende Verschiebungen des Werkzeugs, die zu Fehlern an der Werkstückgeometrie führen könnten, sind vermieden, indem die Andruckkräfte der beiden Werkzeuge gegeneinander von innerhalb radial nach außen und von außerhalb radial nach innen wirken.

In einer weiteren Ausgestaltung der Erfindung ist wenigstens ein Werkzeugträger mit einem Spannsystem versehen, welches die wenigstens zwei spanabhebenden Werkzeuge auf der Längsachse des Werkzeugträgers festlegt.

Durch zwei auf einer Längsachse des Werkzeugträgers festgelegte Werkzeuge können auf zwei unterschiedlichen radialen Positionen liegende Strukturen gleichzeitig eingearbeitet werden, wobei die Werkzeugpositionierung vereinfacht ist und mögliche Positionierfehler verringert sind.

In einer weiteren Ausgestaltung der Erfindung entspricht der Abstand zwischen den wenigstens zwei Werkzeugen im Wesentlichen der Dicke des ringförmigen Werkstücks, insbesondere der Ringdicke.

Durch ein solches Spannsystem können die Positionen der Werkzeuge auf verschiedene Ringdicken angepasst werden, wodurch eine flexible Fertigung ermöglicht wird.

In einer weiteren Ausgestaltung der Erfindung ist wenigstens ein Werkzeugträger mit einem Spannsystem versehen, welches zur Aufnahme und Betrieb von separat angetriebenen Werkzeugen geeignet ist.

Indem Spannsysteme zur Aufnahme von separat angetriebenen Werkzeugen an den Werkzeugträgern vorgesehen sind, kann beispielsweise neben einer Drehbearbeitung auch Fräsbearbeitung durchgeführt werden, was zu einer hohen Flexibilität der Maschine führt.

In einer weiteren Ausgestaltung der Erfindung ist wenigstens ein Werkzeug eines Werkzeugträgers einer zu bearbeitenden Oberfläche des Werkstücks zugeordnet und wenigstens ein Werkzeug ist eines anderen Werkzeugträgers derselben zu bearbeitenden Oberfläche des Werkstücks zugeordnet, derart, dass bei der Bearbeitung eines Werkstücks entstehende Schnittkräfte reduziert, insbesondere wenigstens teilweise aufgehoben, sind.

Die Aufgabenverteilung auf die jeweiligen Werkzeuge geschieht vorteilhaft, so dass entstehende Schnittkräfte sich wenigstens teilweise gegenseitig aufheben.

Weitere Merkmale und Vorteile der vorliegenden Erfindung werden anhand der nachfolgenden Beschreibung einer spanabhebenden Bearbeitungsmaschine gemäß einer Ausführungsform der vorliegenden Erfindung unter Bezugnahme auf die beiliegende Zeichnung deutlich. Darin zeigt
- Fig. 1:: eine perspektivische Darstellung einer spanabhebenden Bearbeitungsmaschine gemäß einer Ausführungsform der vorliegenden Erfindung; und
- Fig. 2:: eine Draufsicht der in Figur 1 dargestellten Bearbeitungsmaschine.

Die Figuren zeigen eine spanabhebende Bearbeitungsmaschine 10 in Form einer Drehmaschine. Die Bearbeitungsmaschine 10 umfasst eine Basis 12, auf der in etwa mittig ein drehend um eine Werktischdrehachse 14 mittels Antriebseinrichtungen 16 antreibbarer runder Werktisch 18 zur Aufnahme eines Werkstücks 20 angeordnet ist. Die Basis 12 ist durch eine Schweißkonstruktion mit einer Blechhaut gebildet, die mit Polymerbeton ausgegossen ist. Durch eine derartige Gestaltung werden sehr gute Dämpfung und Vibrationseigenschaften der Basis 12 erreicht, die sich günstig auf die Dynamik der Maschine auswirken. Alternativ kann auch konventioneller Beton verwendet werden.

Ferner sind auf der Basis 12 zwei baugleiche Ständer 22 und 24 positioniert, die jeweils im Wesentlichen ringsegmentartig ausgebildet sind. Auch die Ständer 22, 24 können aus einer mit Polymerbeton ausgegossenen Schweißkonstruktion gebildet sein. Alternativ kann bei den Ständern 22, 24 auch eine reine Schweißkonstruktion ohne Beton zum Einsatz kommen. An jedem Ständer 22, 24 sind zwei spanabhebende Werkzeuge aufnehmende Werkzeugträger 26, 28 und 30, 32 relativ zum Werktisch 18 verfahrbar gehalten. Die Basis 12 kann auch so gebildet sein, dass mehr als zwei Ständer, beispielsweise drei oder vier Ständer, darauf positioniert sind.

Eine vertikale Verstellung der Werkzeugträger 26, 28, 30 und 32 wird dabei über Vertikalführungen mit diesen zugeordneten (nicht dargestellten) Antrieben und eine horizontale Verstellung über Horizontalführungen 36 mit diesen zugeordneten (nicht dargestellten) Antrieben realisiert, die an den Ständern 22 und 24 vorgesehen sind. Nicht näher bezeichnete Faltenbalge, die der Bewegung der Werkzeugträger 26, 28, 30 und 32 folgen, verhindern das Eindringen von Fremdkörpern. Anstelle oder zusätzlich zu den Faltenbalgen können auch jalousieartige oder lamellenartig angeordnete Metallschienen oder -streben verwendet werden, die so an den Werkzeugträgern 26, 28, 30, 32 befestigt sind, dass sie deren Bewegung in vertikaler Richtung sowie vorteilhafterweise auch in horizontaler Richtung folgen.

Die Werkzeugträger 26, 28 und 30, 32 jedes Ständers 22, 24 schließen vorliegend einen Winkel α von 45° ein. Die Ständer 22 und 24 sind derart relativ zueinander positioniert, dass zwei ihrer Werkzeugträger 26 und 32 in einer gemeinsamen vertikalen Ebene positioniert sind, die vorliegend die Werktischdrehachse 14 umfasst. Entsprechend schließen die einander zugewandten Werkzeugträger 28 und 30 einen Winkel β von 90° ein.

Vorzugsweise schließen jeweils die Werkzeugträger 26, 28, des Ständers 22 und die Werkzeugträger 30, 43 des Ständers 24 einen Winkel 20' ≤ α ≤ 60° ein.

Unterhalb des Werktisches 18 sind zwei nicht näher bezeichnete Förderbänder zum Abführen von Spänen vorgesehen.

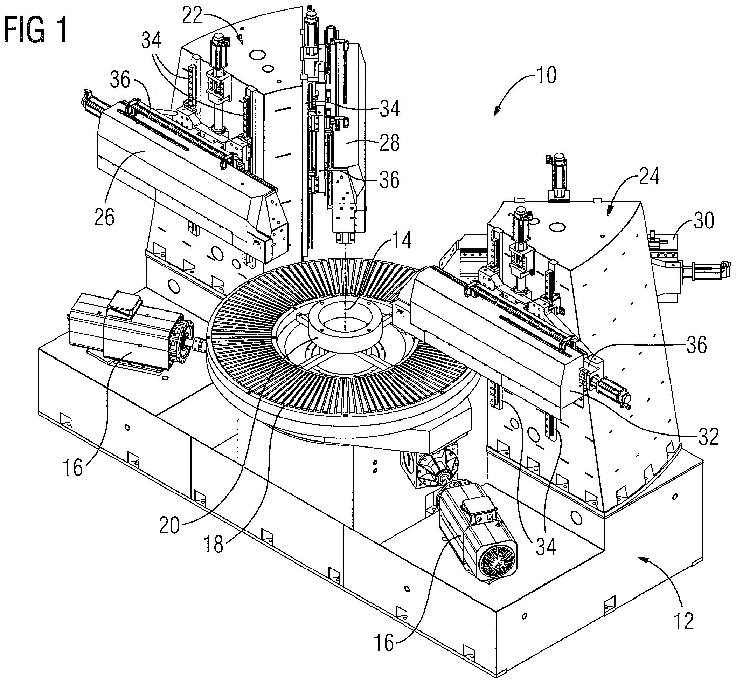

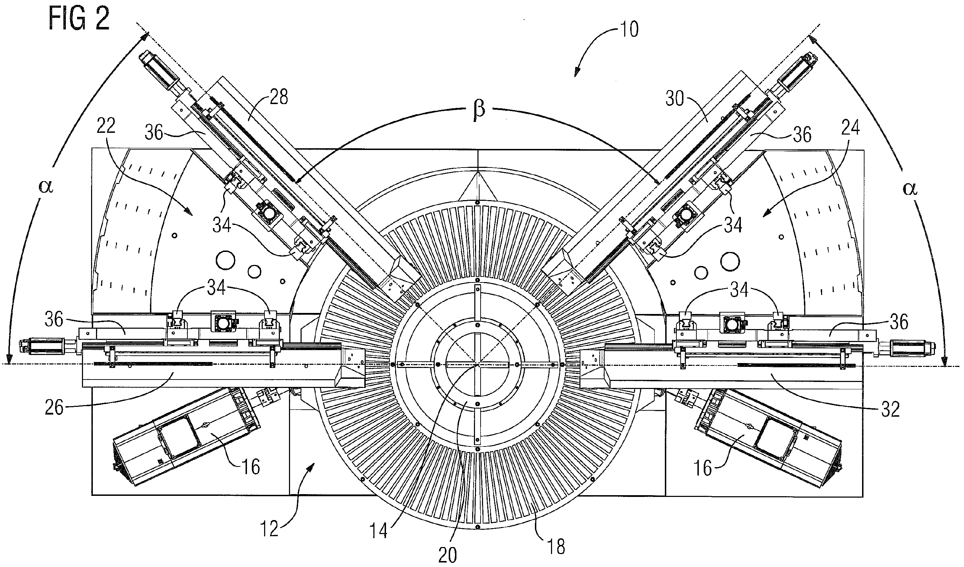

Ein wesentlicher Vorteil der in den Figuren 1 und 2 dargestellten Bearbeitungsmaschine 10 besteht darin, dass aufgrund der im Wesentlichen ringsegmentartigen Ausbildung der beiden Ständer 22 und 24 sowie der gewählten Anordnung der Ständer 22 und 24 trotz der Vielzahl von Werkzeugträgern 26, 28, 30 und 32 ein sehr platzsparender und preiswerter Aufbau erzielt wird. Der Werktisch 18 ist nicht nur von der Vorderseite der Bearbeitungsmaschine 10 gut zugänglich, sondern auch an der Rückseite der Bearbeitungsmaschine 10 ist zwischen den Ständern 22 und 24 hinreichend Platz belassen, um Spanntätigkeiten am Werktisch 18 auszuüben. Die Vielzahl von Werkzeugträgern 26, 28, 30 und 32 ermöglicht zudem sehr kurze Bearbeitungszeiten. Aufgrund der Tatsache, dass die Werkzeugträger 26 und 32 der Ständer 22 und 24 an gegenüberliegenden Seiten des Werktisches 18 in einer gemeinsamen vertikalen Ebene positioniert sind, welche die Werktischdrehachse 14 umfasst, werden darüber hinaus zumindest für die von diesen beiden Werkzeugträgern 26, 32 gehaltenen Werkzeuge während der Bearbeitung eines Werkstücks 20 die Schnittkräfte reduziert, da sich diese zumindest teilweise gegeneinander aufheben.

Die Werkzeuge verschiedener Werkzeugträger können synchron das Werkstück 20 so bearbeiten, dass gleichzeitig verschiedene Oberflächen bearbeitet oder geometrische Strukturen eingearbeitet werden. Dabei wird jeweils einem Werkzeug eines Werkzeugträgers 26, 28, 30, 32 eine zu bearbeitende Fläche am Werkstück zugeordnet, so dass stets nur ein Werkzeug eines Ständers 22, 24 an derselben Fläche des Werkstücks in Eingriff ist. Der zu bearbeitenden Fläche kann ein weiteres, an einem anderen Ständer 22, 24 angeordnetes Werkzeug zugeordnet sein, welches beispielsweise eine Nachbearbeitung der Fläche durchführt.

Vorteilhafterweise können an jedem Werkzeugträger 26, 28, 30, 32 jeweils wenigstens zwei spanabhebende Werkzeuge so angeordnet sein, so dass eine gleichzeitige Bearbeitung von wenigstens zwei Oberflächen des Werkstücks möglich wird. Insbesondere bei einer Anordnung der Werkzeuge auf einer Längsachse des jeweiligen Werkzeugträgers 26, 28, 30, 32 können ringförmige Werkstücke gleichzeitig oder simultan an einer innenliegenden und einer außenliegenden Oberfläche bearbeitet werden. Als Werkzeuge können Drehmeißel zum Einsatz kommen, es ist jedoch auch möglich, angetriebene Werkzeuge, wie z. B. Fräswerkzeuge zu verwenden. Das Spannsystem, über das die Werkzeuge an den Werkzeugträgern 26, 28, 30, 32 aufgespannt sind, kann hydraulisch oder mechanisch ausgeführt sein. Das Spannsystem legt die Werkzeuge so auf der Längsachse des jeweiligen Werkzeugträgers 26, 28, 30, 32 fest, dass der Abstand zwischen den wenigstens zwei Werkzeugen im Wesentlichen der Dicke des ringförmigen Werkstücks 20, also der Ringdicke entspricht. Abhängig vom verwendeten Spannsystem kann der Abstand zwischen den wenigstens zwei Werkstücken fest sein, aber es ist auch möglich, ein flexibles Spannsystem zu verwenden, welches erlaubt, den Abstand zwischen den wenigstens zwei Werkstücken auf Werkstücke 20 mit unterschiedlicher Ringdicke anzupassen. Es können Spannsysteme vorgesehen sein sowohl für nicht separat angetriebene Werkzeuge wie Drehmeißel als auch für separat angetriebene Werkzeuge wie Fräswerkzeuge.

Gemäß einer nicht dargestellten alternativen Ausführungsform der vorliegenden Erfindung können die Ständer 22 und 24 der in den Figuren 1 und 2 dargestellten Bearbeitungsmaschine 10 entlang des Umfangs des Werktisches 18 auch diametral einander gegenüber angeordnet sein, so dass sowohl die Werkzeugträger 26 und 30 als auch die Werkzeugträger 28 und 32 jeweils in einer gemeinsamen vertikalen, die Werktischdrehachse 14 umfassenden Ebene positioniert sind. Entsprechend heben sich sowohl die Schnittkräfte der an den Werkzeugträgern 26 und 30 gehaltenen Werkzeuge als auch die Schnittkräfte der an den Werkzeugträgern 28 und 32 gehaltenen Werkzeuge zumindest teilweise gegeneinander auf.

Es sollte klar sein, dass die Winkel α, welche die Werkzeugträger der jeweiligen Ständer einschließen, als auch der Winkel β, den einander zugewandte Werkzeugträger benachbarter Ständer einschließen, variieren können, wobei der Winkel α 90° oder weniger beträgt. Darüber hinaus können auch mehr als zwei Ständer mit jeweils zwei an diesen gehaltenen Werkzeugträgern vorgesehen sein.

### Bezugszeichenliste

- 10: Bearbeitungsmaschine
- 12: Basis
- 14: Werktischdrehachse
- 16: Antriebseinrichtung
- 18: elektrisch
- 20: Werkstück
- 22: Ständer
- 24: Ständer
- 26: Werkzeugträger
- 28: Werkzeugträger
- 30: Werkzeugträger
- 32: Werkzeugträger
- 34: Vertikalführung
- 36: Horizontalführung

## Patentansprüche

1. Spanabhebende Bearbeitungsmaschine (10), insbesondere Drehmaschine, mit einem drehend um eine Werktischdrehachse (14) antreibbaren Werktisch (18) zur Aufnahme eines Werkstücks (20) und mit wenigstens zwei ortsfesten Ständern (22, 24), an denen jeweils zwei spanabhebende Werkzeuge aufnehmende Werkzeugträger (26, 28) relativ zum Werktisch (18) jeweils verfahrbar gehalten sind, wobei die Werkzeugträger (26, 28 oder 30, 32) wenigstens eines Ständers (22 oder 24) einen rechten oder spitzen Winkel (α) von 90° oder weniger zueinander einschließen und jeweils im Wesentlichen radial zur Werktischdrehachse (14) verfahrbar sind, wobei die Werkzeugträger (26, 28 oder 30, 32) wenigstens eines Ständers einen Winkel 20° ≤ (α) ≤ 60° zueinander einschließen.

2. Spanabhebende Bearbeitungsmaschine (10) nach Anspruch 1, **dadurch gekennzeichnet, dass** die Werkzeugträger (26, 28 oder 30, 32) wenigstens eines Ständers einen Winkel (α) von 45° zueinander einschließen.

3. Spanabhebende Bearbeitungsmaschine (10) nach einem der vorhergehenden Ansprüche, **dadurch gekennzeichnet, dass** die Ständer (22, 24) im Wesentlichen ringsegmentartig ausgebildet sind.

4. Spanabhebende Bearbeitungsmaschine (10) nach einem der vorhergehenden Ansprüche, **dadurch gekennzeichnet, dass** die Ständer (22, 24) derart an gegenüberliegenden Seiten des Werktisches (18) angeordnet sind, dass zumindest zwei ihrer Werkzeugträger (26, 32) in einer gemeinsamen vertikalen Ebene positioniert sind, die bevorzugt die Werktischdrehachse (14) umfasst.

5. Spanabhebende Bearbeitungsmaschine (10) nach einem der vorhergehenden Ansprüche, **dadurch gekennzeichnet, dass** unterhalb des Werktisches (18) zumindest ein Förderband zu m Abführen von Spänen vorgesehen ist.

6. Spanabhebende Bearbeitungsmaschine (10) nach einem der vorhergehenden Ansprüche, **dadurch gekennzeichnet, dass** der Verfahrbewegung der Werkzeugträger (26, 28, 30, 32) folgende Faltenbalge und/oder jalousieartige oder lamellenartig angeordnete Metallschienen oder -streben vorgesehen sind, die ein Eindringen von Fremdkörpern in Hohlräume der Werkzeugträger (26, 28, 30, 32) und/oder der Ständer (22, 24) verhindern.

7. Spanabhebende Bearbeitungsmaschine (10) nach einem der vorhergehenden Ansprüche, **dadurch gekennzeichnet, dass** eine Basis (12) der spanabhebenden Bearbeitungsmaschine (10) und/oder die Ständer (22, 24) aus einer mit Polymerbeton ausgegossenen Schweißkonstruktion gebildet sind.

8. Spanabhebende Bearbeitungsmaschine (10) nach einem der vorhergehenden Ansprüche, **dadurch gekennzeichnet, dass** an wenigstens einem der Werkzeugträger (26, 28, 30, 32) wenigstens zwei spanabhebende Werkzeuge angeordnet sind, so dass wenigstens zwei verschiedene Oberflächen des Werkstücks (20), insbesondere eine innenliegende und eine außenliegende Oberfläche eines ringförmigen Werkstücks (20), simultan und/oder gleichzeitig bearbeitbar sind.

9. Spanabhebende Bearbeitungsmaschine (10) nach Anspruch 8, **dadurch gekennzeichnet, dass** wenigstens ein Werkzeugträger (26, 28, 30, 32) mit einem Spannsystem versehen ist, welches die wenigstens zwei spanabhebenden Werkzeuge auf der Längsachse des Werkzeugträgers (26, 28, 30, 32) festlegt.

10. Spanabhebende Bearbeitungsmaschine (10) nach Anspruch 9, **dadurch gekennzeichnet, dass** der Abstand zwischen den wenigstens zwei Werkzeugen im Wesentlichen der Dicke des ringförmigen Werkstücks (20), insbesondere der Ringdicke, entspricht.

11. Spanabhebende Bearbeitungsmaschine (10) nach einem der vorhergehenden Ansprüche, **dadurch gekennzeichnet, dass** wenigstens ein Werkzeugträger (26, 28, 30, 32) mit einem Spannsystem versehen ist, welches zur Aufnahme und Betrieb von separat angetriebenen Werkzeugen geeignet ist.

12. Spanabhebende Bearbeitungsmaschine (10) nach einem der vorhergehenden Ansprüche, **dadurch gekennzeichnet, dass** wenigstens ein Werkzeug eines Werkzeugträgers (26, 28, 30, 32) einer zu bearbeitenden Oberfläche des Werkstücks zugeordnet ist und wenigstens ein Werkzeug eines anderen Werkzeugträgers (26, 28, 30, 32) derselben zu bearbeitenden Oberfläche des Werkstücks zugeordnet ist, derart, dass bei der Bearbeitung eines Werkstücks (20) entstehende Schnittkräfte reduziert, insbesondere wenigstens teilweise aufgehoben, sind.

## Claims

1. Chip removing metal cutting machine (10), in particular turning center, with a power-drivable machining table (18), rotating around a machining table rotation axis (14) for chucking a workpiece (20) and with at least two stationary upright columns (22, 24), each of which provided with two tool heads (26, 28) holding chip removing tools, where each of which are movable relative to the machining table (18), whereat the tool heads (26, 28, or 30, 32) of at least one upright column (22 or 24) are forming a right angel or an acute angle (α) of 90° or less against each other and are in each case essentially radially movable relative to the machining table rotation axis (14), while the tool heads (26, 28, or 30, 32) of at least one upright column (22 or 24) include an angle of 20° ≤ (α) ≤ 60° between each other.

2. Chip removing metal cutting machine (10) according to claim 1, **characterized by** the fact that the tool heads (26, 28, or 30, 32) of at least one upright column (22 or 24) include an angle (α) of 45° between each other.

3. Chip removing metal cutting machine (10) according to one of the foregoing claims, **characterized by** the fact that the upright columns (22, 24) are essentially shaped ring segment-like.

4. Chip removing metal cutting machine (10) according to one of the foregoing claims, **characterized by** the fact that the upright columns (22, 24) are arranged at opposite sides of the machining table (18) so that at least two of their tool heads (26, 32) are positioned in a common vertical plane, which preferably also includes the machining table rotation axis (14).

5. Chip removing metal cutting machine (10) according to one of the foregoing claims, **characterized by** the fact that underneath the machining table (18) at least one conveyor belt is provided for removing chips form the machine.

6. Chip removing metal cutting machine (10) according to one of the foregoing claims, **characterized by** the fact that bellows and/or louver-type or lamella-like arranged metal covers or guards following the slide travel of the tool heads (26, 28, 30, 32) are provided to prevent any intrusion of foreign objects into the cavities inside the tool heads (26, 28, 30, 32) and/or upright columns (22, 24).

7. Chip removing metal cutting machine (10) according to one of the foregoing claims, **characterized by** the fact that the machine base of the (12) chip removing metal cutting machine (10) and/or the upright columns (22, 24) formed of welded structures are filled with polymer concrete.

8. Chip removing metal cutting machine (10) according to one of the foregoing claims, **characterized by** the fact that on at least one of the tool heads (26, 28, 30, 32) at least two chip removing tools are arranged so that at least two different surfaces of the workpiece (20), in particular one inner and one outer surface of a ring-shaped workpiece (20), can be machined simultaneously and/or at the same time.

9. Chip removing metal cutting machine (10) according to claim 8, **characterized by** the fact that at least one tool head (26, 28, 30, 32) is equipped with a clamping system that fixates the at least two chip removing tools on the longitudinal axis of the tool head (26, 28, 30, 32).

10. Chip removing metal cutting machine (10) according to claim 9, **characterized by** the fact that the distance between the at least two tools corresponds in essence to the thickness of the ring-shaped workpiece (20), in particular conforms to the ring thickness.

11. Chip removing metal cutting machine (10) according to one of the foregoing claims, **characterized by** the fact that at least one tool head (26, 28, 30, 32) is equipped with a clamping system that is appropriate for the attachment and operation of separately driven tools.

12. Chip removing metal cutting machine (10) according to one of the foregoing claims, **characterized by** the fact that at least one tool of a tool head (26, 28, 30, 32) is allocated to a certain surface of the workpiece to be machined, and at least one tool of another tool head (26, 28, 30, 32) is allocated to the same surface of the workpiece to be machined in such way that the cutting forces generated by machining of a workpiece (20) are reduced, in particular are at least partially compensated.

## Revendications

1. Machine d'usinage par enlèvement de copeaux (10), en particulier un tour, avec une table de travail (18) pouvant être entraînée en rotation autour d'un axe de rotation (14) de table de travail, pour recevoir une pièce (20) et avec au moins deux supports (22, 24) fixes sur lesquels sont maintenus, de manière déplaçable par rapport à la table de travail (18), respectivement deux porte-outils (26, 28) recevant des outils d'enlèvement de copeaux, en ce que les porte-outils (26, 28 ou 30, 32) d'au moins un support (22 ou 24) forment l'un par rapport à l'autre un angle (α) droit ou aigu de 90° ou moins, et sont déplaçables à chaque fois sensiblement radialement par rapport à l'axe de rotation (14) de table de travail, en ce que les porte-outils (26, 28 ou 30, 32) d'au moins un support forment l'un par rapport à l'autre un angle de 20° ≤ (α) ≤ 60°.

2. Machine d'usinage par enlèvement de copeaux (10) selon la revendication 1, **caractérisée en ce que** les porte-outils (26, 28 ou 30, 32) d'au moins un support forment l'un par rapport à l'autre un angle (α) de 45°.

3. Machine d'usinage par enlèvement de copeaux (10) selon l'une des revendications précédentes, **caractérisée en ce que** les supports (22, 24) sont réalisés sous forme de segment annulaire.

4. Machine d'usinage par enlèvement de copeaux (10) selon l'une des revendications précédentes, **caractérisée en ce que** les supports (22, 24) sont disposés sur des côtés opposés de la table de travail (18) de sorte qu'au moins deux de leurs porte-outils (26, 32) soient positionnés dans un plan vertical commun qui de préférence entoure l'axe de rotation (14) de table de travail.

5. Machine d'usinage par enlèvement de copeaux (10) selon l'une des revendications précédentes, **caractérisée en ce qu'**au moins une bande transporteuse pour l'évacuation de copeaux est prévue en dessous de la table de travail (18).

6. Machine d'usinage par enlèvement de copeaux (10) selon l'une des revendications précédentes, **caractérisée en ce que** des soufflets suivant le mouvement de déplacement des porte-outils (26, 28, 30, 32) et/ou des rails ou montants métalliques disposés en forme de store ou de lamelle sont prévus pour empêcher une pénétration de corps étrangers dans des cavités des porte-outils (26, 28, 30, 32) et/ou des supports (22, 24).

7. Machine d'usinage par enlèvement de copeaux (10) selon l'une des revendications précédentes, **caractérisée en ce qu'**une base (12) de la machine d'usinage par enlèvement de copeaux (10) et/ou les supports (22, 24) sont formés en une construction soudée coulée avec du béton polymère.

8. Machine d'usinage par enlèvement de copeaux (10) selon l'une des revendications précédentes, **caractérisée en ce qu'**au moins deux outils d'enlèvement de copeaux sont disposés sur au moins un des porte-outils (26, 28, 30, 32) de sorte qu'au moins deux différentes surfaces de la pièce (20), en particulier une surface intérieure et une surface extérieure d'une pièce (20) annulaire, soient usinables simultanément et/ou même temps.

9. Machine d'usinage par enlèvement de copeaux (10) selon la revendication 8, **caractérisée en ce qu'**au moins un porte-outil (26, 28, 30, 32) est muni d'un système de serrage qui fixe au moins les deux outils d'enlèvement de copeaux sur l'axe longitudinal du porte-outil (26, 28, 30 ,32).

10. Machine d'usinage par enlèvement de copeaux (10) selon la revendication 9, **caractérisée en ce que** la distance entre les deux outils au moins correspond sensiblement à l'épaisseur de la pièce (20) annulaire, en particulier à l'épaisseur d'anneau.

11. Machine d'usinage par enlèvement de copeaux (10) selon l'une des revendications précédentes, **caractérisée en ce qu'**au moins un porte-outil (26, 28, 30, 32) est muni d'un système de serrage qui est approprié à la réception et au fonctionnement d'outils entraînés séparément.

12. Machine d'usinage par enlèvement de copeaux (10) selon l'une des revendications précédentes, **caractérisée en ce qu'**au moins un outil d'un porte-outil (26, 28, 30 ,32) est attribué à une surface à usiner de la pièce et au moins un outil d'un autre porte-outil (26, 28, 30 ,32) est attribué à la même surface à usiner de la pièce de sorte que des efforts de coupe engendrés soient réduits, en particulier au moins partiellement supprimés, lors de l'usinage d'une pièce (20).
